# FASCICULE DE BREVET EUROPEEN

(11) **EP 3 094 562 B1**
(45) Date de publication et mention de la délivrance du brevet: **14.02.2018**
(21) Numéro de dépôt: 15704036.1
(22) Date de dépôt: 07.01.2015
(51) Int. Cl.: B64G 1/22, B64G 1/44, B64G 1/66, H01Q 1/28, H01Q 3/04, H01Q 15/16

(54) **STRUCTURE SEGMENTÉE, EN PARTICULIER POUR RÉFLECTEUR D'ANTENNE DE SATELLITE, AVEC DISPOSITIF DE DÉPLOIEMENT À ROTATION ET TRANSLATION COMBINÉES.**
SEGMENTIERTE STRUKTUR, INSBESONDERE FÜR EINEN SATELLITENANTENNENREFLEKTOR, MIT KOMBINIERTER ROTATIONS- UND TRANSLATIONSVORRICHTUNG ZUR ENTFALTUNG
SEGMENTED STRUCTURE, IN PARTICULAR FOR A SATELLITE ANTENNA REFLECTOR, WITH COMBINED ROTATION AND TRANSLATION DEPLOYMENT DEVICE

(30) Priorité: 17.01.2014 FR 1400099
(43) Date de publication de la demande: 23.11.2016
(73) Titulaire: ArianeGroup SAS, 75015 Paris (FR)
(72) Inventeur: COLLOT, Alexandre, F-78510 Triel Sur Seine (FR)
(74) Mandataire: Gevers & Orès
(86) Numéro de dépôt international: PCT/FR2015/000004
(87) Numéro de publication internationale: WO 2015/107283

(56) Documents cités:
- WO-A1-97/12806
- WO-A1-2006/041354
- US-A- 4 811 034
- US-A- 5 570 102

## Description

La présente invention concerne une structure segmentée.

Cette structure segmentée comprend au moins deux panneaux liés ensemble et destinés à être déployés dans l'espace.

Bien que non exclusivement, la présente invention s'applique plus particulièrement à une structure segmentée faisant partie d'un réflecteur d'antenne de satellite de télécommunication, en particulier à un réflecteur d'antenne de grande dimension, fonctionnant dans des bandes de fréquence élevées. La taille du réflecteur est inversement proportionnelle à la fréquence (pour un gain constant). Un tel réflecteur d'antenne comprend généralement une structure rigide (appelée coque) pourvue d'une surface réfléchissante et des moyens de renfort à l'arrière de cette surface, qui participent au maintien de la coque et à la liaison avec le satellite.

La grande dimension de la coque d'un tel réflecteur pose des problèmes d'encombrement lors de l'envoi dans l'espace d'un satellite pourvu d'un tel réflecteur à l'aide d'un lanceur spatial.

Aussi, pour des réflecteurs rigides présentant des diamètres de plusieurs mètres, on prévoit une structure segmentée, pourvue de plusieurs panneaux, en particulier une structure à trois panneaux comprenant un panneau central et deux panneaux d'extrémité.

Cette structure segmentée comporte, de plus, un dispositif de déploiement par panneau d'extrémité, qui est apte à amener le panneau d'extrémité par rapport au panneau principal :
- soit dans une position de stockage, dans laquelle le panneau d'extrémité est superposé au panneau principal sur la face arrière de ce dernier, la face avant du panneau d'extrémité étant dirigée dans le même sens que la face avant du panneau principal ;
- soit dans une position déployée, dans laquelle le panneau d'extrémité est positionné à côté et contre le panneau principal de manière à former un ensemble continu au moins sur leurs faces avant (partie active de l'antenne).

Dans une telle structure segmentée, chaque panneau d'extrémité peut donc prendre une position de stockage pour le transport dans le lanceur spatial et une position déployée lorsque le satellite se trouve dans l'espace.

Par ailleurs, on connaît par le document US-4 811 034, qui est considéré comme l'art antérieur le plus proche et décrit les caractéristiques du préambule de la revendication 1, une structure segmentée pour un réflecteur comprenant une pluralité de panneaux déployables.

La présente invention concerne une structure segmentée, en particulier pour réflecteur d'antenne de satellite, comprenant au moins deux panneaux et un dispositif de déploiement permettant de réaliser dans l'espace un déploiement efficace et avantageux de ces deux panneaux.

Selon l'invention, ladite structure segmentée du type comprenant :
- au moins deux panneaux destinés à être déployés dans l'espace, un premier panneau dit principal comprenant une face avant et une face arrière, et un second panneau dit secondaire comprenant également une face avant et une face arrière ; et
- au moins un dispositif de déploiement relié aux faces arrière respectivement desdits panneaux principal et secondaire et apte à amener ledit panneau secondaire dans l'une ou l'autre des deux positions suivantes, relativement audit panneau principal :
   - une position de stockage, dans laquelle ledit panneau secondaire est au moins partiellement superposé audit panneau principal sur la face arrière de ce dernier, la face avant dudit panneau secondaire étant dirigée dans le même sens que la face avant dudit panneau principal ; et
   - une position déployée, dans laquelle ledit panneau secondaire est positionné vers l'extérieur du panneau principal, à côté et contre ledit panneau principal de manière à former un ensemble continu au moins sur leurs faces avant,
est remarquable en ce que ledit dispositif de déploiement comporte :
- un système de translation comprenant au moins une unité de translation pourvue d'un moteur à liaison hélicoïdale, ledit système de translation étant lié audit panneau secondaire et étant apte à générer un mouvement de translation dudit panneau secondaire par rapport audit panneau principal ; et
- un système de rotation apte à générer une rotation dudit système de translation et du panneau secondaire lié audit système de translation, par rapport audit panneau principal, ledit système de rotation comprenant au moins une unité de rotation apte à générer une rotation entre un premier élément de structure solidaire de la face arrière du panneau principal et un second élément de structure auquel est lié le système de translation.

Ainsi, grâce à l'invention, le panneau secondaire de la structure segmentée peut être déployé de façon efficace et avantageuse dans l'espace, de la position de stockage à la position déployée, à l'aide d'un dispositif de déploiement à rotation et translation combinées, comme précisé ci-dessous.

Dans un mode de réalisation préféré, le système de rotation comprend deux unités de rotation agencées respectivement d'un côté et de l'autre du panneau principal le long d'un axe correspondant à l'axe de rotation desdites deux unités de rotation. De préférence, chaque unité de rotation comprend un moteur rotatif.

En outre, dans un mode de réalisation préféré, chaque unité de translation comprend un moteur rotatif agencé sur ledit second élément de structure, ledit moteur rotatif étant apte à entraîner une vis sans fin agissant sur un troisième élément de structure solidaire de la face arrière du panneau secondaire de manière à déplacer en translation le panneau secondaire par rapport au panneau principal.

Avantageusement, chaque unité de translation est pourvue d'une liaison souple.

Par ailleurs, dans un premier mode de réalisation, le système de translation comprend au moins deux unités de translation, et chaque unité de translation est agencée sur un second élément de structure du système de rotation.

En outre, dans un second mode de réalisation, le système de translation comprend une unité de translation et au moins une unité de guidage réalisant une liaison glissière.

Par ailleurs, dans un mode de réalisation préféré, la structure segmentée comprend :
- un panneau principal central ;
- deux panneaux secondaires agencés de part et d'autre dudit panneau principal central dans la position déployée de manière à présenter une forme parabolique ; et
- deux dispositifs de déploiement associés, respectivement auxdits panneaux secondaires.

La présente invention concerne également :
- un réflecteur d'antenne de satellite qui comprend une structure segmentée telle que précitée ; et
- un satellite qui comprend au moins une telle structure segmentée ou un tel réflecteur d'antenne.

La présente invention concerne également un procédé de déploiement d'une structure segmentée telle que précitée.

Selon l'invention, ce procédé comprend des étapes successives consistant, lors du déploiement de la position de stockage à la position déployée :
a) à réaliser une rotation du système de translation auquel est lié le panneau secondaire, à l'aide du système de rotation, dans un premier sens de rotation, afin d'écarter ledit panneau secondaire dudit panneau principal ;
b) à réaliser une translation du panneau secondaire, à l'aide du système de translation, dans un premier sens de translation vers l'extérieur ;
c) à réaliser une rotation du système de translation auquel est lié le panneau secondaire, à l'aide du système de rotation, dans un second sens de rotation opposé audit premier sens de rotation, afin d'amener ledit panneau secondaire sensiblement dans un même plan moyen que ledit panneau principal ; et
d) à réaliser une translation du panneau secondaire, à l'aide du système de translation, dans un second sens de translation opposé audit premier sens de translation vers l'intérieur, afin d'amener ledit panneau secondaire dans la position déployée.

Les figures du dessin annexé feront bien comprendre comment l'invention peut être réalisée. Sur ces figures, des références identiques désignent des éléments semblables.
La figure 1 est une vue schématique en perspective d'un mode de réalisation particulier d'une structure segmentée illustrant l'invention et comprenant un panneau central ainsi que deux panneaux secondaires, dont chacun est dans une position de stockage.
Les figures 2 et 3 sont des vues partielles schématiques, agrandies, d'éléments particuliers du mode de réalisation de la figure 1.
Les figures 4A et 4B à 7A et 7B illustrent respectivement, en vue en perspective et en vue latérale, différentes étapes successives du déploiement d'un panneau secondaire par rapport à un panneau principal d'une structure segmentée.
Les figures 8 et 9 sont des vues schématiques, en plan, d'un mode de réalisation particulier d'un système de translation d'un dispositif de déploiement.

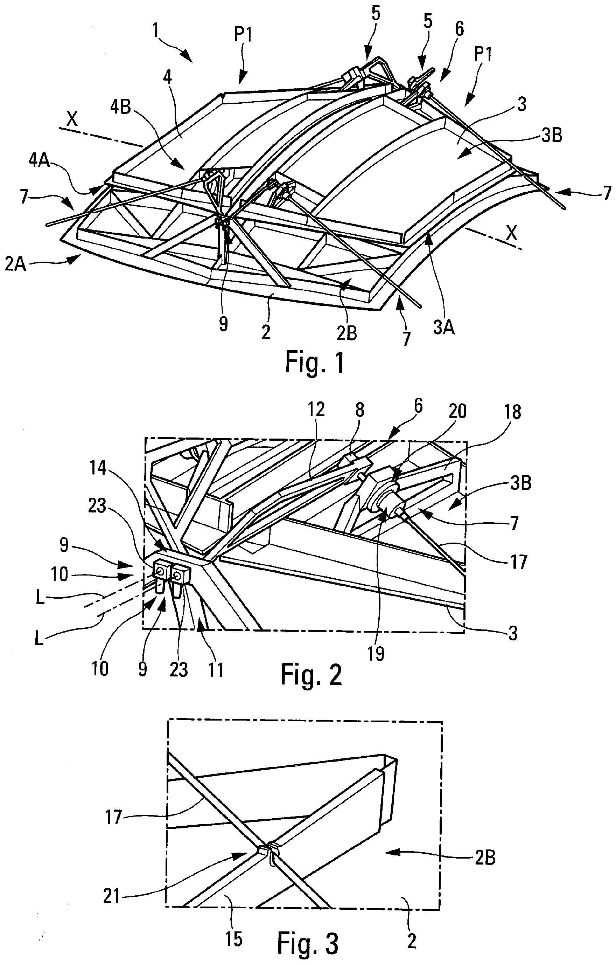

La structure segmentée 1, illustrant l'invention et représentée schématiquement sur la figure 1 notamment, est destinée, plus particulièrement bien que non exclusivement, à un réflecteur d'antenne de satellite de télécommunication. Un tel réflecteur d'antenne comprend généralement, lorsqu'il est déployé dans l'espace, une structure rigide (appelée coque) pourvue d'une surface réfléchissante, ainsi que des moyens de renfort et de maintien (non représentés) à l'arrière de cette structure, qui participent au maintien de la coque et à la liaison avec le satellite. Notamment pour des raisons d'encombrement lors du lancement du satellite par un lanceur spatial, cette structure est de type segmenté, c'est-à-dire qu'elle est formée de plusieurs segments ou panneaux.

Plus précisément, la présente invention concerne une structure segmentée 1 du type comprenant, comme représenté sur la figure 1 :
- au moins deux panneaux, à savoir au moins un premier panneau 2 dit principal comprenant une face avant 2A et une face arrière 2B, et au moins un second panneau 3, 4 dit secondaire comprenant également une face avant 3A, 4A et une face arrière 3B, 4B ; et
- au moins un dispositif de déploiement 5 qui est relié aux faces arrière 2B et 3B, 4B, respectivement du panneau principal 2 et d'un panneau secondaire 3, 4.

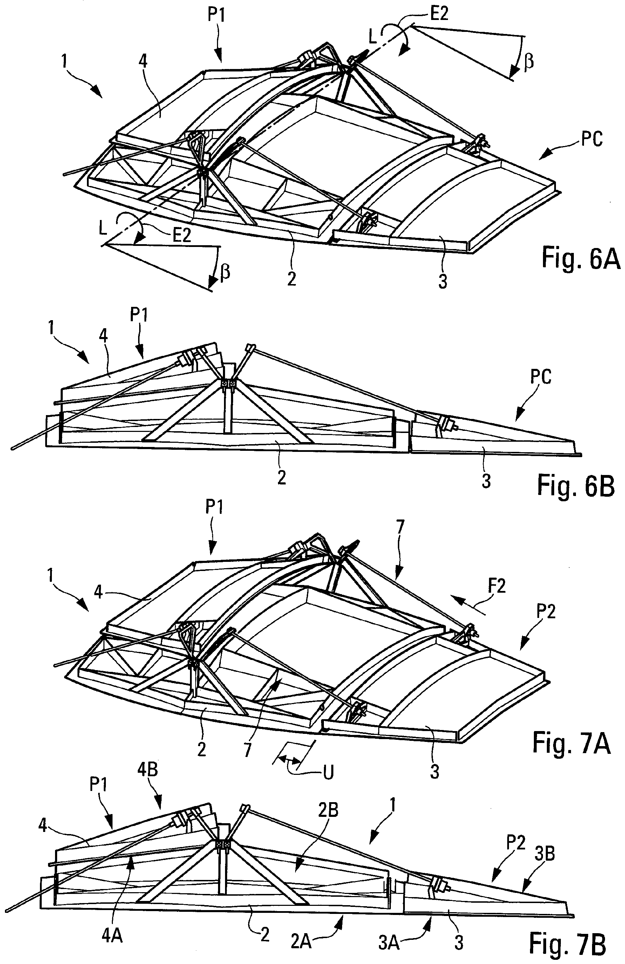

Ce dispositif de déploiement 5 est apte à amener un panneau secondaire, par exemple le panneau secondaire 3, dans l'une ou l'autre des deux positions suivantes, relativement au panneau principal 2 :
- une position de stockage P1 comme représenté sur la figure 1, dans laquelle ledit panneau secondaire 3 est au moins partiellement superposé et de préférence complètement superposé au panneau principal 2 sur la face arrière 2B de ce dernier. La face avant 3A du panneau secondaire 3 est dirigée dans le même sens que la face avant 2A du panneau principal 2 ; et
- une position déployée P2 comme représenté sur les figures 7A et 7B, dans laquelle le panneau secondaire 3 est positionné à côté et contre le panneau principal 2 de manière à former un ensemble continu au moins sur leurs faces avant 2A et 3A.

Dans la description de la présente invention, on entend :
- par face avant et face arrière, les deux faces d'un panneau, la face avant 3A, 4A d'un panneau secondaire 3, 4 étant superposée au moins partiellement à la face arrière 2B du panneau principal 2 dans la position de stockage P1, chaque face avant 2A, 3A, 4A correspondant dans le cas d'un réflecteur d'antenne à la face réfléchissante ; et
- par intérieur et extérieur, les positions des différents éléments concernés par rapport au centre de la structure segmentée 1 dans la position déployée de cette dernière, « intérieur » s'appliquant à la position la plus proche du centre et « extérieur » s'appliquant à la position la plus éloignée du centre dans cette position déployée (dans la direction d'un axe X-X (figure 1), en l'occurrence un axe de symétrie de la structure segmentée 1).

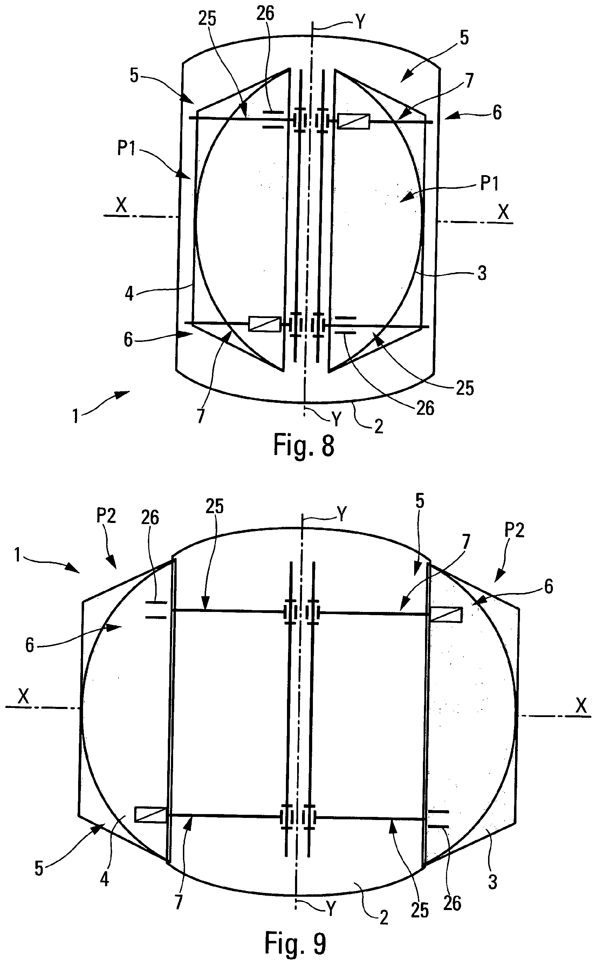

Dans le mode de réalisation préféré, représenté sur les figures, la structure segmentée 1 comprend :
- un panneau principal 2 central ;
- deux panneaux secondaires 3 et 4 agencés de part et d'autre dudit panneau principal 2 central dans la position complètement déployée (figure 9) de telle sorte que ces trois panneaux 2, 3 et 4 présentent une forme parabolique dans cette position complètement déployée ; et
- deux dispositifs de déploiement 5 associés, respectivement, auxdits panneaux secondaires 3 et 4.

Dans la situation de la figure 1, les deux panneaux secondaires 3 et 4 sont dans la position de stockage P1.

Selon l'invention, chacun des dispositifs de déploiement 5 de la structure segmentée 1, comporte :
- un système de translation 6 comprenant au moins une unité de translation 7 pourvue d'un moteur 8 à liaison hélicoïdale (figure 2). Le système de translation 6 est lié panneau secondaire 3, 4 associé et est apte à générer un mouvement de translation dudit panneau secondaire 3, 4 par rapport audit panneau principal 2 ; et
- un système de rotation 9 apte à générer une rotation dudit système de translation 6 et du panneau secondaire 3, 4 lié audit système de translation 6, par rapport audit panneau principal 2. Le système de rotation 9 comprend au moins une unité de rotation 10 apte à générer une rotation entre un élément de structure 11 solidaire de la face arrière 2B du panneau principal 2 et un élément de structure 12 auquel est lié le système de translation 6 (figure 2).

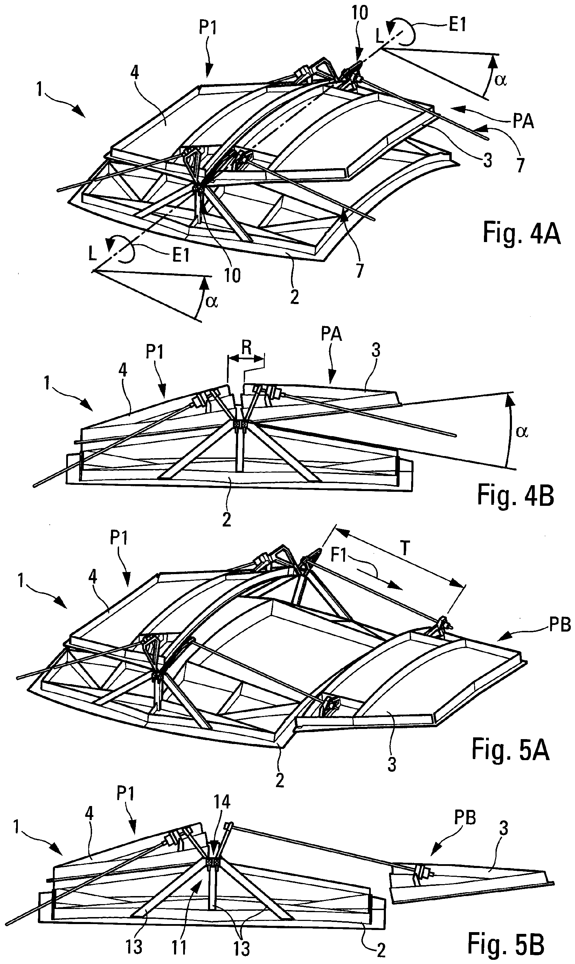

Dans un mode de réalisation particulier, l'élément de structure 11 comprend plusieurs pieds 13, par exemple trois pieds 13 (figure 5B), qui sont fixés par une première extrémité sur la face arrière 2B du panneau principal 2 et qui se rejoignent à un sommet 14, au niveau duquel est prévu le système de rotation 9. Dans un mode de réalisation particulier, deux unités de rotation 10 relatives aux dispositifs de déploiement 5 des deux panneaux 3 et 4 sont agencées côte à côte au niveau dudit sommet 14 (figure 2).

En outre, l'élément de structure 12 peut présenter la forme d'un cadre polygonal, comme représenté par exemple sur la figure 2.

Un tel dispositif de déploiement 5 (comprenant la combinaison d'un système de translation 6 et d'un système de rotation 9) permet de réaliser un déploiement efficace et avantageux du panneau secondaire 3, 4, auquel il est associé, de la position de stockage P1 à la position déployée P2, comme précisé ci-dessous.

Dans un mode de réalisation préféré, chaque unité de translation 6 comprend, comme représenté sur la figure 2, un moteur rotatif 8 agencé sur l'élément de structure 12. Le moteur rotatif 8 est apte à entraîner une vis sans fin 17 agissant sur un élément de structure 18 solidaire de la face arrière 3B du panneau secondaire 3 de manière à déplacer en translation le panneau secondaire 3 par rapport au panneau principal 2.

Au niveau de la liaison avec l'élément de structure 18, l'unité de translation 6 comprend une douille à billes 19, ainsi qu'une liaison souple 20. Vers son autre extrémité, la vis sans fin 17 traverse une ouverture pratiquée dans un élément de structure 15 pourvu de moyens de gerbage 21 permettant un maintien dans la position de stockage P1, comme représenté sur la figure 3.

En outre, dans un mode de réalisation préféré, le système de rotation 9 comprend deux unités de rotation 10 agencées, respectivement, d'un côté et de l'autre du panneau principal 2 le long d'un axe L-L (figure 4A) correspondant à l'axe de rotation desdites deux unités de rotation 10. De préférence, chaque unité de rotation 10 comprend un moteur rotatif 23 (figure 2).

Par ailleurs, dans le cadre de la présente invention, le système de translation 6 peut être réalisé de différentes manières.

Dans un premier mode de réalisation représenté sur les figures 1 et 4A à 7B, le système de translation 6 comprend au moins deux unités de translation 7. Chaque unité de translation 7 est agencée sur un élément de structure 12 du système de rotation 6. Les deux unités de translation 7 sont agencées de part et d'autre du panneau principal 2 par rapport à l'axe X-X.

En outre, dans un second mode de réalisation représenté sur les figures 8 et 9, le système de translation 6 du dispositif de déploiement 5 associé à un panneau secondaire 3, 4, comprend :
- une unité de translation 7 telle que celle précitée, qui est représentée très schématiquement ; et
- une unité de guidage 25 comprenant un manchon de guidage 26 pour réaliser une liaison glissière.

L'unité de translation 7 est agencé d'un côté de l'axe X-X vers la périphérie du panneau principal 2, et l'unité de guidage 25 est agencée de l'autre côté de l'axe X-X également vers la périphérie du panneau principal 2. Sur les figures 8 et 9, on a également représenté un axe Y-Y orthogonal à l'axe X-X.

Les dispositifs de déploiement 5 de la structure segmentée 1, associés aux différents panneaux secondaires 3 et 4 de cette structure segmentée 1, permettent donc de réaliser un déploiement de la structure segmentée 1 d'une position de stockage complet (pour laquelle tous les panneaux secondaires 3 et 4 sont dans une position de stockage P1) à une position complètement déployée (pour laquelle tous les panneaux secondaires 3 et 4 sont dans une position déployée P2).

Le dispositif de déploiement 5 comporte également des moyens non représentés (par exemple une unité centrale) pour commander, notamment, les moteurs rotatifs 8 et 23 (moteurs électriques).

Par ailleurs, la structure segmentée 1 peut comprendre des moyens de maintien usuels (non représentés) des différents panneaux 2, 3 et 4 dans la position de stockage P1. Ces moyens de maintien sont libérés avant le déploiement, pour que chaque dispositif de déploiement 5 puisse mettre en oeuvre le déploiement précisé ci-dessous.

Le fonctionnement dudit dispositif de déploiement 5, pour le déploiement d'un 3 desdits panneaux secondaires 3, 4, à partir de la position de stockage P1 de la figure 1 à la position déployée P2 des figures 7A et 7B, est le suivant :
a) après désolidarisation du panneau secondaire 3 du panneau principal 2, on réalise, à partir de la position de stockage P1 de la figure 1 par exemple, une rotation du système de translation 6 auquel est lié le panneau secondaire 3 autour de l'axe L-L, à l'aide du système de rotation 9. Cette rotation est réalisée dans un premier sens de rotation E1 (et ceci d'un angle α). Cette rotation (de dégagement) permet d'écarter le panneau secondaire 3 du panneau principal 2 et de l'amener dans une position PA représentée sur les figures 4A et 4B. Cette position PA permet de sécuriser les mouvements de cinématiques. Les figures 4A, 4B à 7A, 7B illustrent différentes étapes successives du déploiement du panneau secondaire 3 par rapport au panneau principal 2, respectivement dans une vue en perspective et dans une vue latérale. On peut également prévoir un déplacement simultané des deux panneaux 3 et 4, si le jeu résiduel R (représenté sur la figure 4B) entre les extrémités adjacentes des deux panneaux 3 et 4, après la phase de rotation, est suffisant. Ceci permet de réduire le nombre de motorisations de dégagement. Toutefois, le fait de déployer les panneaux 3 et 4 l'un après l'autre permet d'augmenter la valeur de l'angle α, ce qui est favorable à la sécurisation de la phase de déploiement ;
b) on réalise une translation du panneau secondaire 3, à l'aide du système de translation 6, dans un premier sens de translation F1 vers l'extérieur (et ceci d'une distance T) pour amener le panneau secondaire 3 dans une position PB représentée sur les figures 5A et 5B ;
c) on réalise une rotation du système de translation 6 auquel est lié le panneau secondaire 3, à l'aide du système de rotation 9, dans un second sens de rotation E2 (opposé au sens E1) d'un angle β, afin d'amener le panneau secondaire sensiblement dans un même plan moyen que le panneau principal 2, dans une position PC représentée sur les figures 6A et 6B ; et
d) on réalise une translation du panneau secondaire 3, à l'aide du système de translation 6, dans un second sens de translation F2 (opposé au sens F1) vers l'intérieur, et ceci d'une distance U, afin d'amener le panneau secondaire 3 au contact du panneau principal 2 dans la position déployée P2, comme illustré sur les figures 7A et 7B.

Le même procédé de déploiement est mis en oeuvre pour le panneau secondaire 4 de manière à finalement obtenir une position complètement déployée de la structure segmentée 1.

Bien entendu, le dispositif 5 peut également amener la structure segmentée de la position déployée P2 à la position de stockage P1, si cela s'avérait nécessaire, par exemple pour une opération de validation, en réalisant les opérations précitées dans l'ordre inverse (d, c b, a), avec chaque opération (rotation, translation) mise en oeuvre en sens inverse.

Par ailleurs, la structure segmentée 1 peut comporter des moyens auxiliaires non représentés pour permettre un positionnement final précis entre un panneau secondaire 3, 4 et le panneau principal 2, par exemple dans la situation des figures 7A et 7B pour le panneau secondaire 3, ainsi que des moyens pour verrouiller les panneaux dans la position complètement déployée de la structure segmentée 1.

## Revendications

1. Structure segmentée, en particulier pour réflecteur d'antenne de satellite, ladite structure segmentée (1) comprenant :
- au moins deux panneaux (2, 3, 4) destinés à être déployés dans l'espace, un premier panneau (2) dit principal comprenant une face avant (2A) et une face arrière (2B), et un second panneau (3, 4) dit secondaire comprenant également une face avant (3A, 4A) et une face arrière (3B, 4B) ; et
- au moins un dispositif de déploiement (5) relié aux faces arrière respectivement desdits panneaux principal et secondaire et apte à amener ledit panneau secondaire (3, 4) dans l'une ou l'autre des deux positions suivantes, relativement audit panneau principal (2) :
• une position de stockage (P1), dans laquelle ledit panneau secondaire (3, 4) est au moins partiellement superposé audit panneau principal (2) sur la face arrière (2B) de ce dernier, la face avant (3A, 4A) dudit panneau secondaire (3, 4) étant dirigée dans le même sens que la face avant (2A) dudit panneau principal (2) ; et
• une position déployée (P2), dans laquelle ledit panneau secondaire (3, 4) est positionné vers l'extérieur du panneau principal (2), à côté et contre ledit panneau principal (2) de manière à former un ensemble continu au moins sur leurs faces avant,
- ledit dispositif de déploiement (5) comportant un système de rotation (9) apte à générer une rotation dudit système de translation (6) et du panneau secondaire (3, 4) lié audit système de translation (6), par rapport audit panneau principal (2), ledit système de rotation (9) comprenant au moins une unité de rotation (10) apte à générer une rotation (10) entre un premier élément de structure (11) solidaire de la face arrière (2B) du panneau principal (2) et un second élément de structure (12) auquel est lié le système de translation (6),
**caractérisée en ce que** ledit dispositif de déploiement (5) comporte, de plus le système de translation (6) comprenant au moins une unité de translation (7) pourvue d'un moteur (8) à liaison hélicoïdale, ledit système de translation (6) étant lié audit panneau secondaire (3, 4) et étant apte à générer un mouvement de translation dudit panneau secondaire (3, 4) par rapport audit panneau principal (2)

2. Structure segmentée selon la revendication 1,
**caractérisée en ce que** ledit système de rotation (9) comprend deux unités de rotation (10) agencées respectivement d'un côté et de l'autre du panneau principal (2) le long d'un axe (L-L) correspondant à !'axe de rotation desdites deux unités de rotation (10).

3. Structure segmentée selon l'une des revendications 1 et 2, **caractérisée en ce que** chaque unité de rotation (10) comprend un moteur rotatif (23).

4. Structure segmentée selon l'une quelconque des revendications précédentes,
**caractérisée en ce que** chaque unité de translation (6) comprend un moteur rotatif (8) agencé sur ledit second élément de structure (12), ledit moteur rotatif (8) étant apte à entraîner une vis sans fin (17) agissant sur un troisième élément de structure (18) solidaire de la face arrière (3B) du panneau secondaire (3) de manière à déplacer en translation le panneau secondaire (3) par rapport au panneau principal (2).

5. Structure segmentée selon l'une quelconque des revendications précédentes,
**caractérisée en ce que** chaque unité de translation (6) est pourvue d'une liaison souple (20).

6. Structure segmentée selon l'une quelconque des revendications 1 à 5,
**caractérisée en ce que** le système de translation (6) comprend au moins deux unités de translation (7), et **en ce que** chaque unité de translation (7) est agencée sur un second élément de structure (12) du système de rotation (9).

7. Structure segmentée selon l'une quelconque des revendications 1 à 5,
**caractérisée en ce que** le système de translation (6) comprend une unité de translation (7) et au moins une unité de guidage (25) réalisant une liaison glissière.

8. Structure segmentée selon l'une quelconque des revendications précédentes,
**caractérisée en ce qu'**elle comprend :
- un panneau principal (2) central ;
- deux panneaux secondaires (3, 4) agencés de part et d'autre dudit panneau principal (2) central dans la position déployée de manière à présenter une forme parabolique ; et
- deux dispositifs de déploiement (5) associés, respectivement, auxdits panneaux secondaires (3, 4).

9. Réflecteur d'antenne de satellite,
**caractérisé en ce qu'**il comporte une structure segmentée (1) selon l'une quelconque des revendications 1 à 8.

10. Satellite,
**caractérisé en ce qu'**il comporte au moins une structure segmentée (1) selon l'une quelconque des revendications 1 à 8.

11. Procédé de déploiement d'une structure segmentée (1) selon l'une quelconque des revendications 1 à 8,
**caractérisé en ce qu'**il comprend des étapes successives consistant, lors du déploiement de la position de stockage (P1) à la position déployée (P2) :
a) à réaliser une rotation du système de translation (6) auquel est lié le panneau secondaire (3), à l'aide du système de rotation (9), dans un premier sens de rotation (E1), afin d'écarter le panneau secondaire (3) du panneau principal (2) ;
b) à réaliser une translation du panneau secondaire (3), à l'aide du système de translation (6), dans un premier sens de translation (F1) vers l'extérieur ;
c) à réaliser une rotation du système de translation (6) auquel est lié le panneau secondaire (3), à l'aide du système de rotation (9), dans un second sens de rotation (E2) opposé audit premier sens de rotation (E1), afin d'amener le panneau secondaire (3) sensiblement dans un même plan moyen que le panneau principal (2) ; et
d) à réaliser une translation du panneau secondaire (3), à l'aide du système de translation (6), dans un second sens de translation (F2) opposé audit premier sens de translation (F1) vers l'intérieur, afin d'amener ledit panneau secondaire (3) dans la position déployée (P2).

## Patentansprüche

1. Segmentierte Struktur, insbesondere für einen Satellitenantennenreflektor, wobei die segmentierte Struktur (1) umfasst:
- mindestens zwei Platten (2, 3, 4), die dazu bestimmt sind, in dem Weltraum entfaltet zu werden, wobei eine erste Platte (2), die die Hauptplatte genannt wird, eine Vorderseite (2A) und eine Rückseite (2B) umfasst, und wobei eine zweite Platte (3, 4), die die Nebenplatte genannt wird, auch eine Vorderseite (3A, 4A) und eine Rückseite (3B, 4B) umfasst; und
- mindestens eine Entfaltungsvorrichtung (5), die mit den Rückseiten der Haupt- bzw. Nebenplatte verbunden ist und geeignet ist, die Nebenplatte (3, 4) in die eine oder die andere von zwei folgenden Positionen relativ zu der Hauptplatte (2) zu führen:
• eine Lagerposition (P1), in der die Nebenplatte (3, 4) mindestens teilweise mit der Hauptplatte (2) auf der Rückseite (2B) der letzteren überlappt, wobei die Vorderseite (3A, 4A) der Nebenplatte (3, 4) in der gleichen Richtung wie die Vorderseite (2A) der Hauptplatte (2) gerichtet ist; und
• eine entfaltete Position (P2), in der die Nebenplatte (3, 4) nach außen von der Hauptplatte (2) neben und gegenüber der Hauptplatte (2) positioniert ist, um eine kontinuierliche Anordnung mindestens auf ihren Vorderseiten zu bilden,
- wobei die Entfaltungsvorrichtung (5) ein Rotationssystem (9) aufweist, das geeignet ist, eine Rotation des Translationssystems (6) und der Nebenplatte (3, 4), die mit dem Translationssystem (6) verbunden ist, mit Bezug auf die Hauptplatte (2) durchzuführen, wobei das Rotationssystem (9) mindestens eine Rotationseinheit (10) umfasst, die geeignet ist, eine Rotation (10) zwischen einem ersten Strukturelement (11), das einstückig mit der Rückseite (2B) der Hauptplatte (2) ist, und einem zweiten Strukturelement (12) zu erzeugen, mit dem das Translationssystem (6) verbunden ist,
**dadurch gekennzeichnet, dass** die Entfaltungsvorrichtung (5) ferner das Translationssystem (6) aufweist, das mindestens eine Translationseinheit (7) umfasst, die mit einem Motor (8) mit einer spiralförmigen Verbindung versehen ist, wobei das Translationssystem (6) mit der Nebenplatte (3, 4) verbunden ist und angepasst ist, eine Translationsbewegung der Nebenplatte (3, 4) mit Bezug auf die Hauptplatte (2) durchzuführen.

2. Segmentierte Struktur nach Anspruch 1,
**dadurch gekennzeichnet, dass** das Rotationssystem (9) zwei Rotationseinheiten (10) umfasst, die auf der einen Seite bzw. der anderen Seite der Hauptplatte (2) entlang einer Achse (L-L) angeordnet sind, die der Rotationsachse der zwei Rotationseinheiten (10) entspricht.

3. Segmentierte Struktur nach einem der Ansprüche 1 und 2,
**dadurch gekennzeichnet, dass** jede Rotationseinheit (10) einen Rotationsmotor (23) umfasst.

4. Segmentierte Struktur nach einem der vorhergehenden Ansprüche,
**dadurch gekennzeichnet, dass** jede Translationseinheit (6) einen Rotationsmotor (8) umfasst, der auf dem zweiten Strukturelement (12) angeordnet ist, wobei der Rotationsmotor (8) geeignet ist, eine endlose Schraube (17) anzutreiben, die auf ein drittes Strukturelement (18) einwirkt, das einstückig mit der Rückseite (3B) der Nebenplatte (3) ist, um die Nebenplatte (3) relativ zu der Hauptplatte (2) translatorisch zu bewegen.

5. Segmentierte Struktur nach einem der vorhergehenden Ansprüche,
**dadurch gekennzeichnet, dass** jede Translationseinheit (6) mit einer flexiblen Verbindung (20) versehen ist.

6. Segmentierte Struktur nach einem der Ansprüche 1 bis 5,
**dadurch gekennzeichnet, dass** das Translationssystem (6) mindestens zwei Translationseinheiten (7) umfasst, und dass jede Translationseinheit (7) auf einem zweiten Strukturelement (12) des Rotationssystems (9) angeordnet ist.

7. Segmentierte Struktur nach einem der Ansprüche 1 bis 5,
**dadurch gekennzeichnet, dass** das Translationssystem (6) eine Translationseinheit (7) und mindestens eine Führungseinheit (25) umfasst, die eine Gleitschienenverbindung schafft.

8. Segmentierte Struktur nach einem der vorhergehenden Ansprüche, **dadurch gekennzeichnet, dass** sie umfasst:
- eine zentrale Hauptplatte (2);
- zwei Nebenplatten (3, 4), die auf beiden Seiten der zentralen Hauptplatte (2) in der entfalteten Position angeordnet sind, um eine parabolische Form aufzuweisen; und
- zwei Entfaltungsvorrichtungen (5), die jeweils zu den Nebenplatten (3, 4) zugeordnet sind.

9. Satellitenantennenreflektor,
**dadurch gekennzeichnet, dass** er eine segmentierte Struktur (1) nach einem der Ansprüche 1 bis 8 aufweist.

10. Satellit,
**dadurch gekennzeichnet, dass** er mindestens eine segmentierte Struktur (1) nach einem der Ansprüche 1 bis 8 aufweist.

11. Verfahren zur Entfaltung einer segmentierten Struktur (1) nach einem der Ansprüche 1 bis 8,
**dadurch gekennzeichnet, dass** es aufeinanderfolgende Schritte umfasst, die bei der Entfaltung von der Lagerposition (P1) in die entfaltete Position (P2) darin bestehen:
a) eine Rotation des Translationssystems (6), mit dem die Nebenplatte (3) verbunden ist, mit Hilfe des Rotationssystems (9) in einer ersten Rotationsrichtung (E1) durchzuführen, um die Nebenplatte (3) von der Hauptplatte (2) zu entfernen;
b) eine Translation der Nebenplatte (3) mit Hilfe des Translationssystems (6) in einer ersten Translationsrichtung (F1) nach außen durchzuführen;
c) eine Rotation des Translationssystems (6), mit dem die Nebenplatte (3) verbunden ist, mit Hilfe des Rotationssystems (9) in einer zweiten Rotationsrichtung (E2) entgegengesetzt zu der ersten Rotationsrichtung (E1) durchzuführen, um die Nebenplatte (3) im Wesentlichen in eine gleiche mittlere Ebene wie die Hauptplatte (2) zu führen; und
d) eine Translation der Nebenplatte (3) mit Hilfe des Translationssystems (6) in einer zweiten Translationsrichtung (F2) entgegengesetzt zu der ersten Translationsrichtung (F1) nach innen durchzuführen, um die Nebenplatte (3) in die entfaltete Position (P2) zu führen.

## Claims

1. Segmented structure, in particular for a satellite antenna reflector, said segmented structure (1) comprising:
- at least two panels (2, 3, 4), intended to be deployed in space, a first panel (2) referred to as the main panel, comprising a front face (2A) and a rear face (2B), and a second panel (3, 4) referred to as the secondary panel, also comprising a front face (3A, 4A) and a rear face (3B, 4B); and
- at least one deployment device (5) which is connected to the respective rear faces of said main and secondary panels and is capable of bringing said secondary panel (3, 4) into one or the other of the following two positions, relative to said main panel (2);
• a storage position (P1), in which said secondary panel (3, 4) is positioned at least in part on said main panel (2) on the rear face (2B) thereof, the front face (3A, 4A) of said secondary panel (3, 4) being directed in the same direction as the front face (2A) of said main panel (2); and
• a deployed position (P2), in which said secondary panel (3, 4) is positioned towards the outside of the main panel (2), to the side and against said main panel (2) in order to form a continuous assembly at least on the front faces thereof,
- said deployment device (5) comprising a rotation system (9) that is capable of causing said translation system (6) and the secondary panel (3, 4) connected to said translation system (6) to rotate relative to said main panel (2), said rotation system (9) comprising at least one rotation unit (10) capable of generating a rotation (10) between a first structural element (11) rigidly connected to the rear face (2B) of the main panel (2) and a second structural element (12), to which the translation system (6) is connected,
**characterised in that** said deployment device (5) comprises further the translation system (6) comprising at least one translation unit (7) provided with a helical geared motor (8), said translation system (6) being connected to said secondary panel (3, 4) and being capable of generating a translational movement of said secondary panel (3, 4) relative to said main panel (2).

2. Segmented structure according to claim 1,
**characterised in that** said rotation system (9) comprises two rotation units (10) respectively arranged on either side of the main panel (2) along an axis (L-L) corresponding to the axis of rotation of said two rotation units (10).

3. Segmented structure according to either claim 1 or claim 2,
**characterised in that** each rotation unit (10) comprises a rotary motor (23).

4. Segmented structure according to any of the preceding claims,
**characterised in that** each translation unit (6) comprises a rotary motor (8) arranged on said second structural element (12), said rotary motor (8) being capable of driving an endless screw (17) acting on a third structural element (18) rigidly connected to the rear face (3B) of the secondary panel (3) so as to move the secondary panel (3) in translation relative to the main panel (2).

5. Segmented structure according to any of the preceding claims,
**characterised in that** each translation unit (6) is provided with a flexible link (20).

6. Segmented structure according to any of claims 1 to 5,
**characterised in that** the translation system (6) comprises at least two translation units (7), and **in that** each translation unit (7) is arranged on a second structural element (12) of the rotation system (9).

7. Segmented structure according to any of claims 1 to 5,
**characterised in that** the translation system (6) comprises a translation unit (7) and at least one guiding unit (25) producing a sliding link.

8. Segmented structure according to any of the preceding claims,
**characterised in that** it comprises:
- a central main panel (2);
- two secondary panels (3, 4) arranged on either side of said central main panel (2) in the deployed position so as to have a parabolic shape; and
- two deployment devices (5) respectively associated with said secondary panels (3, 4).

9. Satellite antenna reflector,
**characterised in that** it comprises a segmented structure (1) according to any of claims 1 to 8.

10. Satellite,
**characterised in that** it comprises at least one segmented structure (1) according to any of claims 1 to 8.

11. Method for deploying a segmented structure (1) according to any of claims 1 to 8, **characterised in that** it comprises successive steps consisting, during deployment from the storage position (P1) to the deployed position (P2), in:
a) rotating the translation system (6), to which the secondary panel (3) is connected, in a first rotation direction (E1) by means of the rotation system (9), in order to space the secondary panel (3) from the main panel (2);
b) translating the secondary panel (3) in a first translation direction (F1) towards the outside by means of the translation system (6);
c) rotating the translation system (6), to which the secondary panel (3) is connected, in a second rotation direction (E2) opposite to said first rotation direction (E1) by means of the rotation system (9), in order to bring the secondary panel (3) substantially into the same average plane as the main panel (2); and
d) translating the secondary panel (3) in a second translation direction (F2) opposite to said first translation direction (F1) towards the inside by means of the translation system (6), in order to bring said secondary panel (3) into the deployed position (P2).
